Europäisches Patentamt

European Patent Office

Office européen des brevets

(11) Publication number: **0 125 778**
A2

# EUROPEAN PATENT APPLICATION

(21) Application number: 84302371.4

(22) Date of filing: 06.04.84

(51) Int. Cl.³: **G 05 B 19/18**

(30) Priority: 07.04.83 US 483082

(43) Date of publication of application:
21.11.84 Bulletin 84/47

(84) Designated Contracting States:
DE FR GB NL

(71) Applicant: TECHNICARE CORPORATION
29100 Aurora Road
Solon, Ohio 44139(US)

(72) Inventor: Skutler, Mark Wyatt
7317 Virginia Dr.
Ravenna Ohio 44266(US)

(72) Inventor: Knecht, Leo Walter
2334 Green Acres Drive
Parma Ohio 44134(US)

(72) Inventor: Carper, Robert Lewis
94 East Case Drive
Hudson Ohio 44236(US)

(74) Representative: Colgan, Stephen James et al,
CARPMAELS & RANSFORD 43 Bloomsbury Square
London WC1A 2RA.(GB)

(54) Point selection and position indicating apparatus.

(57) Apparatus for use in selecting a point or plane in an object translatable along a path, and for indicating the distance of the selected point or plane from a predetermined position in the path. A reference point in the path is established by a line of light projected onto the translatable object. When the line of light identifies a point or plane of interest in the object, a reset signal is transmitted to a computer. The reset signal causes a number, a reset quantity representing the known distance between the reference point or line of light and the predetermined position, to be recorded in computer memory. As the object then is translated along the path, an encoder supplies signals to a counter that is incremented or decremented in response to movement of the object toward or away from the predetermined position. The reset quantity initially has the count both added to it and subtracted from it and the result, the reset quantity, is displayed by the computer. As the count in the counter changes during movement of the object toward or away from the predetermined position, the displayed result changes accordingly. The apparatus may be used in properly positioning a patient in a medical imaging system.

FIG.2.

POINT SELECTION AND POSITION INDICATING APPARATUS

This invention relates to apparatus suitable for use in selecting a point or plane in an object that is translatable along a path, and for indicating the distance of the selected point or plane from a predetermined position in such path.

More particularly, the invention relates to apparatus suitable for use in positioning an object, such as a patient table, within a medical or industrial imaging device. The imaging device particularly intended is the magnet of a nuclear-magnetic-resonance (NMR) imaging system, but the invention is not limited to such application and may be applied in other situations in which a selectable point or plane in an object is to be placed at, or a desired distance from, a predetermined position after translation along a path. The invention is particularly useful where the desired position of the object is not at an easily observable location or is not readily accessible.

In many industrial and diagnostic medical imaging applications an object, which may be a movable table or similar device carrying the subject or patient to be imaged, must be translated into the imaging apparatus for the acquisition of data. For example, in medical NMR imaging, a patient is placed on a patient table which has a translatable portion. The translatable portion of the patient table may be manually or power operated during the course of its continuous or intermittent movement along a path that brings it and the patient into the bore of the magnet used in NMR imaging. The NMR magnet has within it a predetermined position to which the object (or patient) undergoing examination must be translated for acquisition of the data necessary for production of images. The predetermined position in the magnet may be an imaging plane or the center of a volume that is to be the site for data acquisition.

Laser light beams positioned within the gantry of an X-ray computed tomography (CT) imaging system have in the past been used to identify a predetermined position of interest, i.e., the CT imaging plane. The laser light is projected onto a patient lying on the patient table in the gantry, and the beam appears as one or more lines of light. In a system of this type, it is possible to position a patient by movement of the patient table to the point at which the laser light is on the patient's anatomical location of interest. The present invention provides an alternative that can be used in NMR and other applications.

In accordance with the invention, apparatus is provided for use in selecting a point or plane in an object that is translatable along a path, and for indicating the distance of the point or plane from such predetermined position.

The apparatus includes means for establishing a reference point in the path, the reference point establishing a reference number or value related to the distance between the reference point and the predetermined position. Also included in the apparatus are means for selecting a point or plane in the object that is to be translated. The point or plane has a predetermined positional relationship to the reference point and, in fact, may be coincidental with the reference point. The selection and indicating apparatus of the invention further includes means for recording a number or value representing the distance along the path between the reference point and the predetermined position toward or away from which the selected
point or plane in the object is to be translated. During
translation of the object along the path, the recorded
number or value representing the distance between the
reference point and the predetermined position is modified
as a function of the distance traveled by the object along
the path. Means are provided for indicating the magnitude
of the modified number.

The invention may be better understood by reference to the
detailed description which follows and to the drawings.

## In the Drawings

Figure 1 is a perspective view of a medical NMR imaging
system having apparatus according to the invention for use
in selecting a point or plane in a patient table, and for
indicating the distance of the selected point or plane
from a predetermined position within the magnet;

Figure 2 is a partial sectional elevational view of the
NMR system of Figure 1;

Figure 3 is a partial plan view of the movable portion of
the patient table, the view being in the direction
indicated by the line III-III in Figure 2;

Figure 4 is a partial sectional view, taken along the line
IV-IV in Figure 3, of an encoder used to generate a signal
used in modifying a recorded count representative of the
distance of a reference point from the predetermined
position;

Figure 5 is a partial elevational view of the encoder of Figure 4 and shows a chain that is used to drive both the movable portion of the patient table and the encoder;

Figure 6 is a perspective view of a portion of a platform that is used to support a plurality of incandescent lamps used to project beams of light onto the patient table, the platform being pendently mounted from the top of the magnet;

Figure 7 is a partial sectional view, taken along the line VII-VII in Figure 2, of one of the incandescent light sources and its associated projecting means;

Figure 8 is an electrical block diagram illustrating the interconnection of the encoder, a keypad microterminal, a computer, a counter and related logic circuitry; and

Figure 9 is a flow chart for computer software used in the operation of the invention.

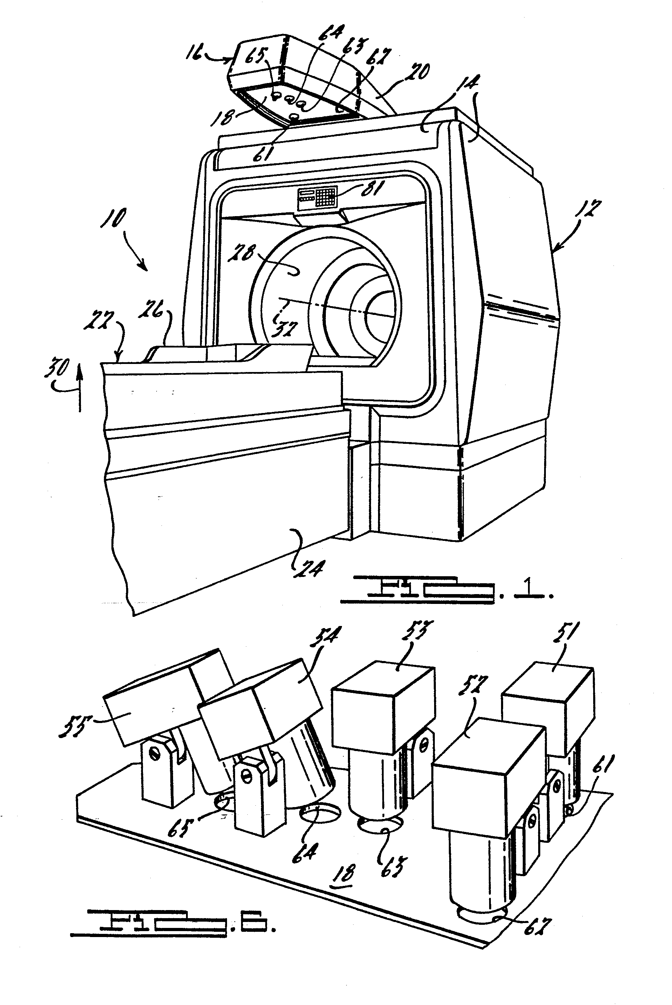

With references now to the drawings, wherein like numerals refer to like parts or elements in the several views, there is shown in Figure 1 an NMR imaging system generally designated by the numeral 10.

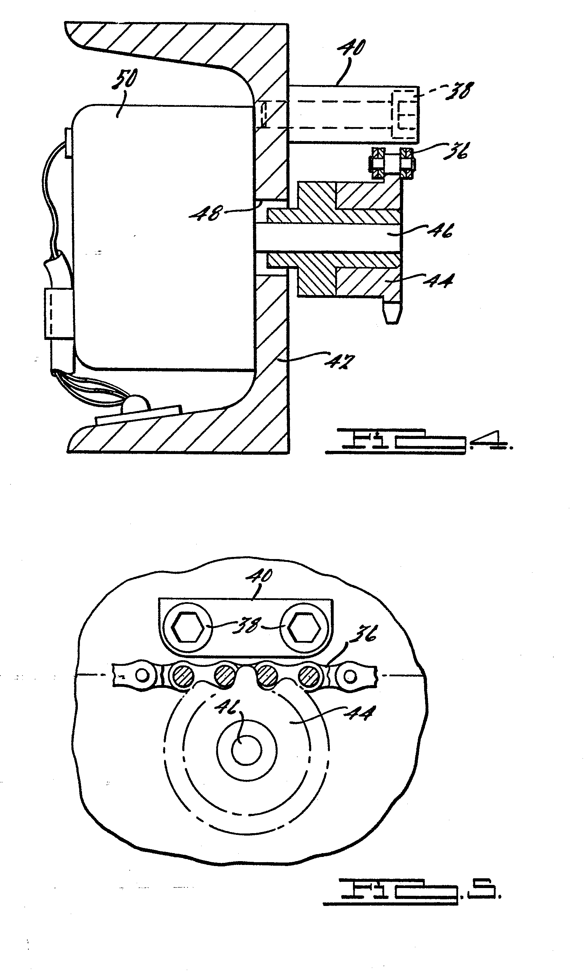

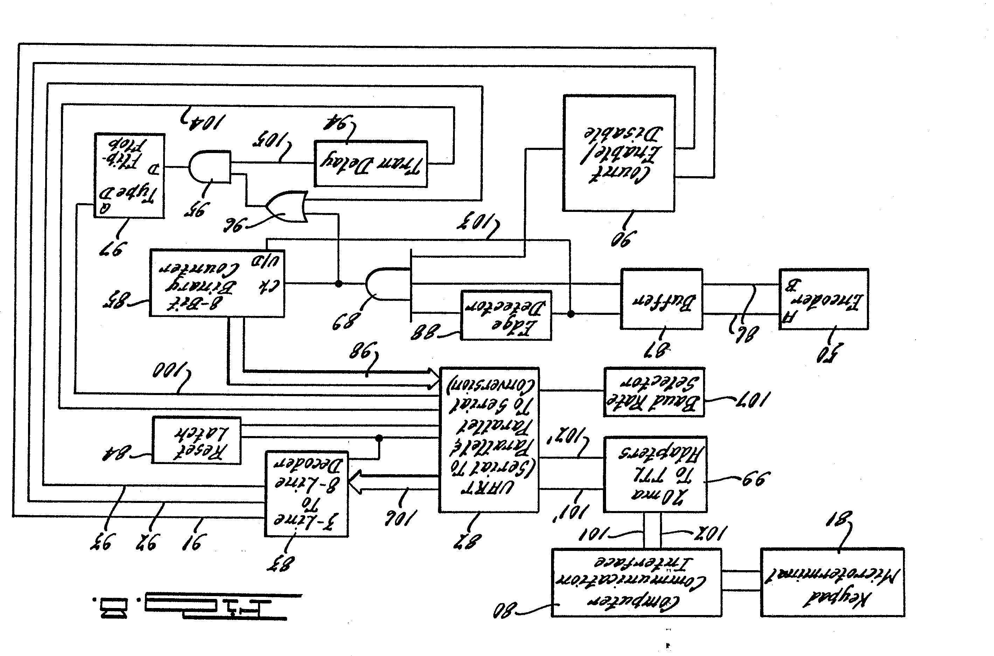

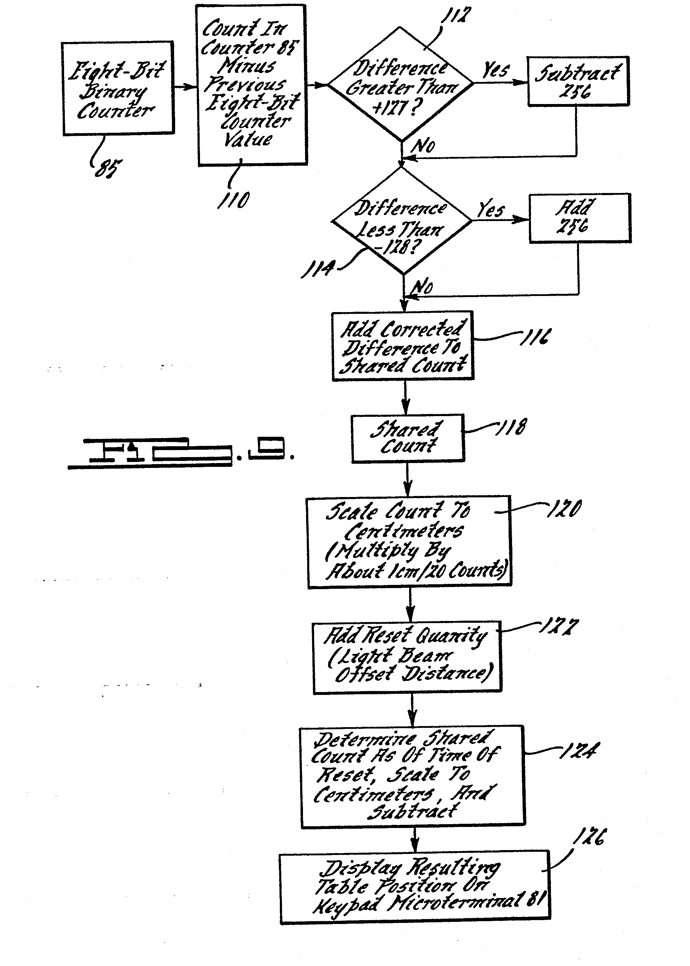

The NMR imaging system 10 includes a magnet 12, which may be an electrically resistive or superconductive magnet. The magnet, whether resistive or superconductive, typically has four or more coils positioned on a common axis to provide a strong static magnetic field. The magnet is surrounded by covers 14 and has a pendently mounted light projection system 16. A platform 18 of the light projection system supports a plurality of light projecting devices, as may best be seen in Figure 6, which are enclosed by the cover 20.

A patient table 22 is provided to allow a patient or object on the translatable portion 26 of the patient table to be moved into the bore 28 of the magnet. The base 24 of the patient table is stationary, while the translatable portion 26 is capable of moving both upwardly (as indicated by the arrow 30) and along a path parallel with the axis 32 of the magnet. In use, the patient table may be at a low position when a patient is placed in a pallet 27 of the movable portion 26. When the movable portion is raised, the patient is translated both upwardly and, for a small distance, in a direction toward the bore 28 of the magnet. Subsequent movement parallel to the axis 32 is achieved by manual cranking of the pallet into the magnet bore. For purposes of the discussion which follows, it will be assumed that the pallet 27 has already been translated upwardly and a partial axial distance when a point or plane on pallet 27 is selected for positioning in the bore of the magnet. The effect caused by point or plane selection prior to the initial upward and partial axial translation is mentioned near the end of this detailed description.

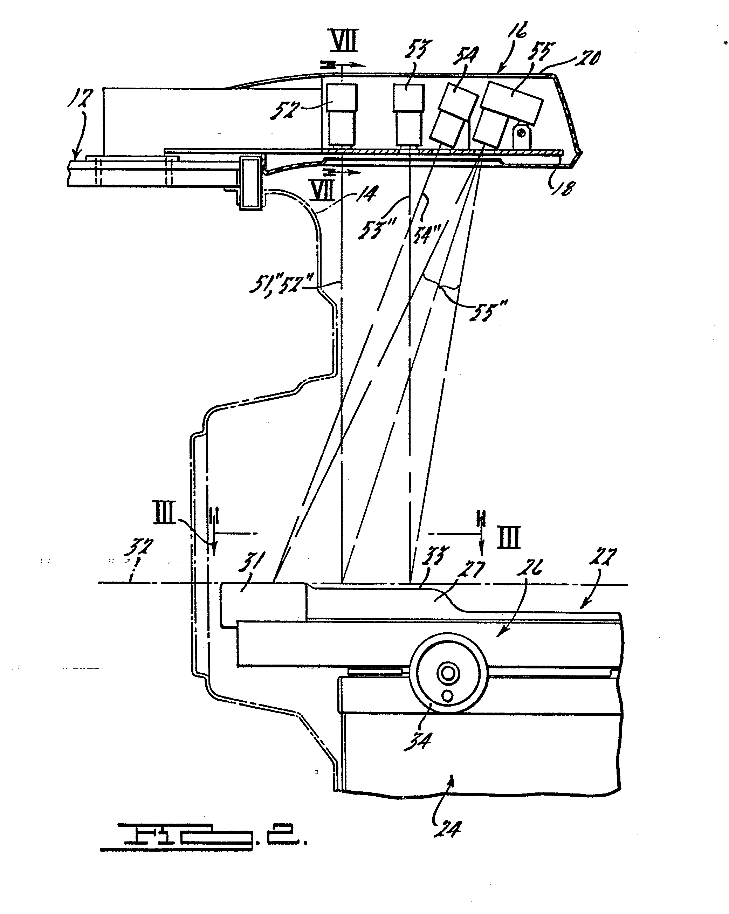

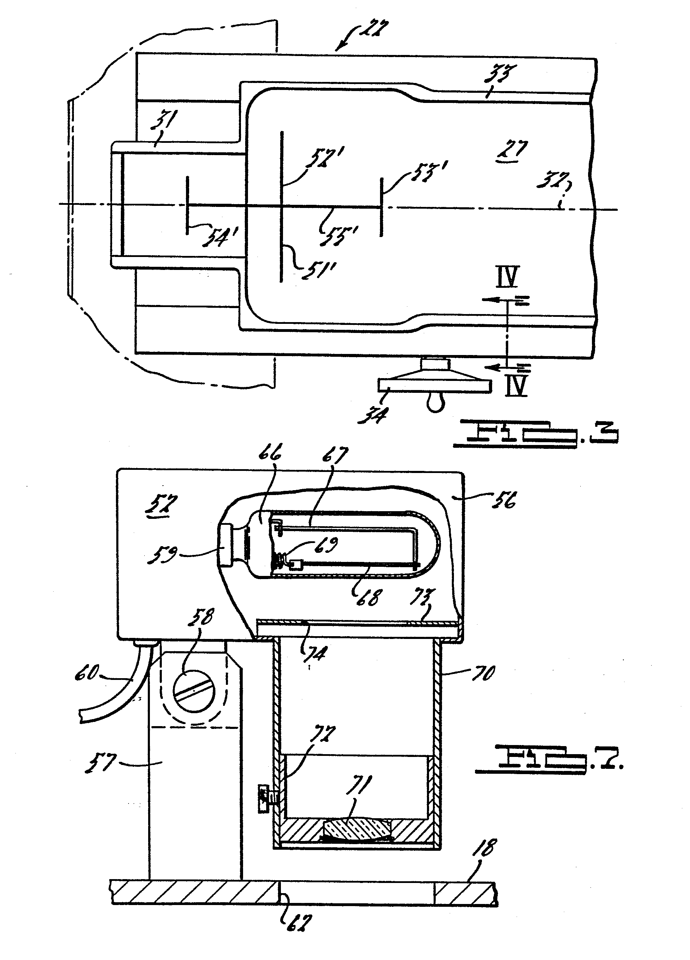

As shown in Figures 2 and 3, the patient table has a manually-rotatable crank 34 that can be used to cause the pallet 27 of the patient table to be translated into, and withdrawn from, the magnet bore.

With particular reference to Figures 3, 4, and 5, it may be seen that the patient table 22 has a C-channel 42. After the patient table has had its translatable portion raised upwardly and, to some extent, axially, the C-channel remains fixed. This movement can be obtained with an electrical or hydraulic drive. Further movement of the translatable portion of the table is limited to a direction parallel to the axis 32 and is achieved with the crank 34. Crank 34 drives the pallet 27 through a chain 36. The drive mechanism (not shown) causes the pallet to move with the chain. This permits the movement of the pallet to be determined by sensing the linear travel of the chain 36. In sensing the linear travel of the chain and pallet, a sprocket 44 is placed in engagement with the chain and is prevented from becoming disengaged by a plastic guide block 40 retained on the C-channel with screws 38. The sprocket is mounted on a shaft 46 of an encoder 50. The shaft of the encoder passes through an opening 48 in the C-channel 42. Encoder 50 produces pulses on two output wires or channels A and B, which not only can be used to provide an indication of the distance traveled by the chain and connected translatable portion of the patient table, but which also can be used to indicate the direction of the translation. The sprocket 44 can be selected to provide a desired number of sets of pulses A and B for each unit of linear travel of the chain. For purposes of this description, it will be assumed that the encoder 50 provides twenty sets of pulses A and B for each centimeter of chain travel. A suitable encoder is commercially available from Data Technology, Inc., of Boston, Massachusetts as model no. RS-23L.

In the practice of the invention, a means is required for selecting a point or plane in the patient table or other object to be translated. Thus, the NMR-imaging-system implementation described herein has, as may be seen in Figures 2, 3, 6 and 7, a plurality of light projecting devices mounted on the platform 18. While the number and type of these light sources can be varied, in the embodiment shown there are five sources identified by the numerals 51, 52, 53, 54 and 55. The beams from these light sources impinge on the patient table (object) below and produce a plurality of lines of light identified by the respectively corresponding numerals 51', 52', 53', 54' and 55'. In Figure 2, the beams producing the lines of light are identified by respectively corresponding numerals 51", 52", 53", 54" and 55". While only one line of light is required in the preferred implementation of the invention, additional lines of light may be used as illustrated in Figure 3. Light from the light sources 51-55 passes through the platform 18 via openings 61-65 adjacent the respective lenses of the light sources, as is more fully described hereinafter.

In Figures 2 and 3, the translatable portion 26 of the patient table can be seen to have a pallet 27 that is made from a molded material in the general form of the human body. The pallet has a portion 31 for receiving a patient's head and a portion 33 that receives the patient's body. The lines of light 51'-55' impinging on the pallet are best illustrated in Figure 3. Lines 51' and 52' are collinear. The plane passing through these lines transverse to the axis 32 may be regarded as a reference plane and, at the intersection of this plane with the axis 32, as a reference point. This reference point or plane does not have to be coincident with the lines of light 51' and 52'; the line or lines of light are used as a means for selecting a point or plane on the patient table, but the selected point or plane need only be at a location that has a predetermined positional relationship to the reference point or plane. The line of light 55' is parallel with axis 32 and is of a greater length than are the other lines. Lines of light 53' and 54' are transverse to axis 32 and are intended to indicate generally the respective ends of the active NMR imaging area.

Figure 7 illustrates one of the light sources, i.e., the light source 52, in partial sectional view. While laser or other light sources could be used, the light source 52 utilizes an incandescent lamp of unusual design to produce a line of light that is projected onto the object below. Light source 52 has a housing 56 that is pivotally mounted at 58 on a support 57 secured to the platform 18. The housing has a conventional lamp socket 59 that is supplied with electrical energy via a cord 60. An incandescent lamp 66 is received in the socket 59 and has a glass envelope in which a filament support structure 67 is located. The filament support structure preferably is made from a nonferromagnetic material, such as a series 300 stainless steel, to prevent warping of the support structure and attached filament when located in the presence of the strong magnetic field (several kilogauss) of the magnet 12 typically used in NMR imaging applications. The elongated filament 68 of the lamp 66 is held in tension by a spring 69 through which current flows to the filament. The light from the glowing filament enters a tube 70 having a lens 71 that is carried by an adjustable focus tube 72. Light from the filament passes through a long slit 74 in an arcuate metal restriction plate 73. This forms a line of light that enters the focus tube and lens and is projected onto the patient table below. The light source 52 is commercially available from Fairway International, Inc., of Kent, Ohio and is called a "Fairway Filiform Line Projector".

In Figure 8, there is shown a schematic electrical diagram of circuitry useful in association with the apparatus of Figures 1-7 for the selection of a point or plane on the patient table to be translated into the magnet 12 and for indicating that the selected point or plane has reached a predetermined position within the magnet. The position within the magnet would, under normal circumstances, be the center of the magnet and would be the point on the axis 32 at which imaging is centered. Otherwise stated, in an NMR system, the predetermined position within the magnet would be the center of the magnet's homogeneous field volume, which in whole-body NMR imaging may be a spherical volume of perhaps 50 cm diameter.

The NMR imaging system 10 utilizes a computer, which, for example, may be a Digital Equipment Corporation model PDP-11. This computer has a computer communication interface 80 that has a serial transmit line 101 and a serial receive line 102. These lines as illustrated are of the 20 ma current loop type and are connected to adapters 99, which convert the current pulses on serial line 101 to voltage pulses on the analogous transmit line 101', thus effecting 20 ma current-loop to TTL-logic-voltage conversion. Similarly, TTL logic voltage pulses on receive-line 102' are converted to the 20 ma current pulses to be serially received by the computer communication interface 80. This interface 80 has the capability of outputting a byte of serial ASCII code. This byte of information is transmitted over line 101 and is received by the adapter 99, which then transmits the byte to the universal asynchronous receiver/transmitter (UART) 82 on line 101'. The UART receives the serial data, converts it to eight bits of parallel data, and places it on lines 106. If the bits of data are not decodable by a three-line to eight-line decoder 83, they are cleared by a reset latch 84 and the UART is enabled to receive another character. If decodable data is on lines 106, the three-line to eight-line decoder 83 places a logic zero on either line 91, 92, or 93 until the lines 106 are cleared and the UART 82 is enabled by the reset latch 84.

A logic zero placed on line 91 informs the circuit of Figure 8 to send to the computer, via the UART 82, any changes that occur in a count stored in an eight-bit counter 85 (which counts from 0-255); a logic zero on line 92 disables such transmission of the count. Upon initialization of the computer, a logic zero appears on line 93 and causes the count in counter 85 to be transmitted to the computer. The UART has the function of converting parallel data to serial data and vice versa.

The purpose of the circuitry of Figure 8 is to transmit pulses to the interface 80 that can be used to inform a computer program of changes in the position of the translatable pallet-portion 27 of the patient table. The keypad terminal 81 in the circuitry is used to inform the computer program that the lines of light 51'-52' identify a point or plane on the pallet 27 (or on a patient lying on the pallet) that has been selected to be positioned at or near the center of imaging within the magnet 12. In other words, the lines of light identify a point or plane that is to be positioned at some desired distance from such plane or slice. When this selection has been made by the operator of the apparatus of the invention, the operator signals the computer interface 80 with a reset or control signal. This signal originates at the keypad microterminal 81, which may be built into the cover 14 of the magnet 12 as is shown in Figure 1. Changes in the count in counter 85 then are used to inform the computer program of the progress, either forward or backward, of the translatable pallet-portion of the patient table toward the predetermined position or center of imaging within the magnet 12.

In the operation of the Figure 8 circuitry, the signals on bus 106 are applied to the three-line to eight-line decoder 83. When there is a logic zero on line 91 (or at system initialization when line 93 is at a logic zero level), the UART is instructed to transmit the parallel data from counter 85, which appears on the eight-line bus 98, to the computer interface via the computer receive lines 102' and 102. If the signal on line 100 from the Q-output of the type-D flip-flop 97 is a logic one enabling the UART 82 to transmit, the transmission of the count occurs each time the count in counter 85 changes, provided a transmit-delay circuit 94 has timed out. This count changes whenever a pulse occurs at the clock (CK) input of counter 85. A pulse occurs at the counter clock input every time encoder 50 transmits a set of pulses on its output leads 86, which are the two channels A and B of the encoder. If the pulse on channel A leads the pulse on channel B, the encoder is turning in one direction, indicating movement of the patient table toward the magnet 12, and if the channel A pulse lags the channel B pulse the patient table is being translated away from the magnet. As previously mentioned, the encoder may provide twenty sets of A and B pulses on leads 86 for each centimeter of travel of the pallet 27. The edge detector 88, the AND-gate 89 and line 103 are connected and arranged such that the counter 85 is made to count up when the patient table is moving toward the magnet and is made to count down when it is moving away from the magnet.

A baud rate selector 107 allows the UART to transmit and receive data at a selectable speed. After data transmission, the UART indicates that its buffer is empty by placing a logic one on line 104 connected to the time-delay circuit 94. After the time delay, which prevents too-frequent transmissions of counter data to interface 80, a logic one level appears on line 104 and is applied to an AND-gate 95 whose output is connected to the D-input of flip-flop 97. Flip-flop 97 has an output line 100 that is connected to the UART 82 to enable it to transmit the count in counter 85 each time a pulse at its clock input which would change its count, occurs. The transmit signal on line 100 also occurs when a pulse is applied, via line 93 or OR-gate 96, to the D-input of flip-flop 97, thereby, causing the count to be readout to the computer, for example, during system initialization.

With particular reference now to Figure 9, there is shown a flow chart of the program used by the NMR system computer to cause the recordation and display of the patient table position relative to the predetermined position (center of imaging) in the magnet 12. The program has the function of using the count stored in counter 85 in conjunction with the reset or control signal from the keypad terminal 81 to provide a display of patient table position.

When the lines of light 51' and 52' indicate a point or plane on the patient table that is to be translated toward or away from the predetermined position in the magnet 12, the operator actuates a push-button in the keypad terminal. This signals the computer program to reset in a manner described in greater detail below. At the time of the signal, the computer program is aware of the current count in the counter 85 and any subsequent changes in count represent deviations in table position from that existing at the time the reset signal occurs. Thus, the reset signal occurs when tge translatable pallet-portion of the table is at a desired position, which can be determined by use of the light beams to select a point or plane on the patient table. The light beams 51' and 52' have a known physical relationship to the predetermined position or some other established location in the patient table translation path can be used as the reference position. Preferably, the reference position coincides with the point at which the lines of light 51' and 52' intersect the axis 32. In any case, the reference position would have a predetermined relationship to such point. If, for example, the selection of the point or plane (whose position relative to the predetermined position within the magnet 12 is to be indicated) is made before the patient table is raised and partially translated axially, then the reference position would not coincide with the intersection of the light beams with the axis; instead, this reference position would be displaced a known amount from the point or plane identified by the light beams.

The distance of the reference position from the predetermined position within the magnet 12 is a known quantity (hereinafter called the "reset quantity") that can be displayed as the table position at the time of the reset signal. Deviations in table position can be added or subtracted from this quantity, depending upon direction of table movement, to indicate the position of the table as it moves along its translation path. As this modified number is displayed, a comparison can be made of the modified number with the reset quantity. In the preferred form of the invention, the computer program makes the comparison by subtracting scaled counts from the reset quantity as the table pallet-portion 27 translates, and the resulting difference is displayed as a number appearing on the keypad microterminal 81. In this manner, the display is made to read zero when the selected point on the patient or patient table has reached the predetermined position (center of imaging) within the magnet.

In Figure 9, the counter 85 is illustrated as having a count in the range from 0-255. If the count reaches 255, the next incremental pulse from encoder 50 causes the counter to go back to 0; similarly, if the counter is at zero and a decremental pulse occurs, the count becomes 255. For this reason, the current count is compared with the preceding count, as illustrated at 110, and the difference is examined at 112 and 114. If the difference is greater than +127, 256 is subtracted from the difference; if the difference is less than -128, 256 is added to the difference. At 116, the corrected difference is added to the previous count in counter 85, and is stored in computer memory as a "shared count" as shown at 118. The shared count contains a count that can be identical to the count in counter 85, that in all cases is representative of the count in counter 85, but that can have a different numerical value required for accurate representation of actual changes in position of the translatable pallet-portion 27 of the patient table.

The shared count in computer memory as indicated at 118 is scaled at 120 to represent actual physical units of measure, such as centimeters. This is accomplished by multiplication of the shared count by a factor, such as 1 cm/20 counts. The scaled count then is added, as indicated at 122, to the reset quantity, which also would be in centimeters. At 124, the shared count as of the time of reset is scaled to centimeters and subtracted from the sum of the reset quantity and scaled current count. This is the table position, in centimeters from the predetermined position within the magnet 12, that is displayed, as stated at 126, on the keypad microterminal 81.

The operator of the NMR system can use the displayed number as an indication of the position of the selected point or plane in the patient table (or patient) from the predetermined position (center of imaging) within the magnet. The number will be zero when the point is at such position and will be the indicated number of centimeters, either plus or minus, from such position when a number other than zero is displayed. This displayed number can be used by the NMR system operator to guide patient positioning such that a point or plane other than the point or plane initially selected will be at the predetermined position. Patient positioning in this manner may be desired where multiple image slices are being acquired in sequence. The number displayed at the time of data acquisition can be recorded with the data.

At the time of reset, the shared count at 118 is equal to the count at the time of reset. Since this count, after scaling, is both added and subtracted from the reset quantity, the number displayed on the keypad microterminal immediately after reset is the reset quantity, i.e., the distance of the selected point or plane in the patient table from the predetermined position within the magnet 12.

WHAT IS CLAIMED IS:

1. Apparatus for use in selecting a point or plane in an object that is translatable along a path, and for indicating the distance of the selected point or plane from the predetermined position in such path, the apparatus comprising:

(a) means for establishing a reference point in the path, the reference point establishing a reference number or value related to the distance between the reference point and the predetermined position;

(b) means for selecting a point or plane in the object that is to be translated, the selected point or plane having a predetermined positional relationship to the reference point;

(c) means for recording a number or value respresenting the distance along the path between the reference point and the predetermined position toward or away from which the selected point or plane in the object is to be translated;

(d) means for modifying the recorded number or value during translation of the object, the modification being a function of the distance of travel of the object along the path; and

(e) means for indicating the magnitude of the modified number or value.

2. Apparatus in accordance with Claim 1, wherein the selecting means comprises means for projecting at least one light beam onto the object.

0125778

-17-

3. Apparatus in accordance with Claim 2, wherein the means for projecting a light beam onto the object comprises an incandescent lamp having an elongated filament, light emanating from the filament being projected as a line of light impinging upon the object.

4. Apparatus in accordance with Claim 2, wherein the means for projecting a light beam onto the object comprises means for generating a line of light that impinges upon the object, the line of light being used in establishing the selected point on the object.

5. Apparatus in accordance with Claim 3, wherein the line of light establishes the selected point on the object.

6. Apparatus in accordance with Claim 4, wherein the line of light also establishes the reference point.

7. Apparatus in accordance with Claim 5, wherein the line of light also establishes the reference point.

8. Apparatus in accordance with Claim 1, wherein the recording means comprises a counter which receives the reference number or value, wherein the modifying means comprises an encoder coupled to the counter, the encoder providing a signal for incrementing or decrementing the count held in the counter, the encoder being driven by translation of the object and providing the signal in response to such translation, and the indicating means being a means for displaying a number representative of the count held in the counter.

9. Apparatus in accordance with Claim 8, which includes computer means for controlling the display of the number representative of the count held in the counter, the computer means including software means for scaling the displayed number in response to the count in the counter, the count being a binary representation of length units determined by the signal from the encoder.

10. Apparatus in accordance with Claim 2, wherein the object comprises a patient table used in an NMR imaging system, the NMR imaging system including a magnet having a patient entry into which a portion of the patient table is translatable, the light beam being projectable onto the patient table when the translatable portion is at least partially withdrawn from the magnet, and the modifying means comprising an encoder mounted on the patient table.

11. Apparatus in accordance with Claim 10, wherein the means for projecting a light beam onto the object comprises an incandescent lamp having an elongated filament, light emanating from the filament being projected as a line of light impinging upon the patient table.

12. Apparatus in accordance with Claim 10, wherein the source of the light beam is pendently mounted from the magnet.

13. Apparatus in accordance with Claim 11, wherein the elongated filament of the incandescent lamp has support means from a non-ferromagnetic material.

14. Apparatus in accordance with Claim 10, which includes a platform extending outwardly from the top of the magnet and over the patient table, the platform having a plurality of incandescent lamps with elongated filaments mounted on the platform and projecting a plurality of lines of light onto the patient table, at least two non-parallel lines of light identifying a point on the patient table.

15.  Apparatus in accordance with Claim 14, wherein the lines of light approximately identify the length of the region of the patient table in which NMR imaging can occur when the translatable portion of the patient table is fully drawn into the magnet.

FIG. 1.

FIG. 6.

0125778

FIG. 2.

0125778

FIG.3

FIG.7.

0125778

FIG. 4.

FIG. 5.

FIG. 8.

5/6

0125778

0125778

Eight-Bit Binary Counter —85

Count In Counter 85 Minus Previous Eight-Bit Counter Value —110

Difference Greater Than +127? —112 → Yes → Subtract 256

No

Difference Less Than -128? —114 → Yes → Add 256

No

Add Corrected Difference To Shared Count —116

Shared Count —118

Scale Count To Centimeters (Multiply By About 1cm/20 Counts) —120

Add Reset Quantity (Light Beam Offset Distance) —122

Determine Shared Count As Of Time Of Reset, Scale To Centimeters, And Subtract —124

Display Resulting Table Position On Keypad Microterminal 81 —126

FIG. 9.